# EUROPEAN PATENT APPLICATION

(11) **EP 4 793 619 A1**
(43) Date of publication of application: **19.08.2026**
(21) Application number: 26158885.9
(22) Date of filing: 16.02.2026
(51) Int. Cl.: G01M 15/14, G01M 99/00, G01M 13/04, G01N 25/00

(54) **MATERIAL TESTING FOR A BEARING INNER RING**

(30) Priority: 14.02.2025 US 202519054425
(71) Applicant: Pratt & Whitney Canada Corp., (01BE5) Longueuil, QC J4G 1A1 (CA)
(72) Inventor: PIOTROWSKI, Maciej, J4G 1A1 (01BE5) Longueuil (CA); SEKOWSKA, Katarzyna, J4G 1A1 (01BE5) Longueuil (CA)
(74) Representative: Dehns

(57) **Abstract**

A method for testing a material strength of a bearing inner ring (104) includes mounting the bearing inner ring (104) on a test shaft (156) to form a ring test assembly (162). The bearing inner ring (104) includes a ring material having a first coefficient of thermal expansion. The test shaft (156) includes a test shaft (156) material having a second coefficient of thermal expansion. The second coefficient of thermal expansion is greater than the first coefficient of thermal expansion. The method further includes heating the ring test assembly (162), cooling the ring test assembly (162), and testing the material strength of the bearing inner ring (104). The testing includes performing a plurality of cycles of the steps of heating the ring test assembly and cooling the ring test assembly.

## Description

### TECHNICAL FIELD

This disclosure relates generally to component material testing and, more particularly, methods for testing a material strength of a ring body.

### BACKGROUND OF THE ART

Rotational equipment, such as a gas turbine engine for an aircraft propulsion system, may include one or more bearings configured to rotationally support rotational components (e.g., a shaft) of the rotational equipment. Various material characteristics of components of these bearings may impact the durability operational life of the components. Systems and methods for testing the material characteristics of bearing components are known in the art. While these known systems and methods may be suitable for their intended purposes, there is always room in the art for improvement.

### SUMMARY

According to an aspect of the present invention, a method for testing a material strength of a bearing inner ring (e.g., a bearing inner ring for an engine such as a gas turbine engine, rotary engine or piston engine) includes mounting the bearing inner ring on a test shaft having an axial centerline to form a ring test assembly of the bearing inner ring mounted on the test shaft. The bearing inner ring is mounted on the test shaft with an inner radial surface of the bearing inner ring contacting an outer radial surface of the test shaft. The bearing inner ring includes a ring material having a first coefficient of thermal expansion. The test shaft includes a test shaft material having a second coefficient of thermal expansion. The second coefficient of thermal expansion is greater than the first coefficient of thermal expansion. The method further includes heating the ring test assembly to increase a temperature of the ring test assembly to a first temperature range, cooling the ring test assembly to decrease the temperature of the ring test assembly from the first temperature range to a second temperature range, and testing the material strength of the bearing inner ring. The testing includes performing a plurality of cycles of the steps of heating the ring test assembly and cooling the ring test assembly.

In any of the aspects or embodiments described above and herein, the method may further include visually inspecting the bearing inner ring subsequent to performing the plurality of cycles to classify a material strength of the inner ring (the bearing inner ring).

In any of the aspects or embodiments described above and herein, visually inspecting the bearing inner ring may include applying a fluorescent penetrant inspection technique to the bearing inner ring.

In any of the aspects or embodiments described above and herein, the ring test assembly may be rotationally fixed relative to the axial centerline while heating the ring test assembly and cooling the ring test assembly.

In any of the aspects or embodiments described above and herein, the bearing inner ring may be mounted on the test shaft with an interference fit.

In any of the aspects or embodiments described above and herein, the method may further include selecting a first diameter and a first stiffness of the test shaft to be substantially the same as a second diameter and a second thickness, respectively, of a reference shaft (e.g., an engine shaft) of a reference engine configurable with the bearing inner ring mounted on the reference shaft.

In any of the aspects or embodiments described above and herein, the reference shaft may include a reference shaft material different than the test shaft material.

In any of the aspects or embodiments described above and herein, the test shaft is a solid shaft and the reference shaft is a hollow shaft.

In any of the aspects or embodiments described above and herein, the inner bearing ring may have a maximum test hoop stress at the first temperature range and a minimum test hoop stress at the second temperature range.

In any of the aspects or embodiments described above and herein, heating the ring test assembly may include immersing the ring test assembly in a heating oil.

In any of the aspects or embodiments described above and herein, the bearing inner ring may form a plurality of lubrication passages extending through the bearing inner ring from the outer radial surface toward the inner radial surface.

In any of the aspects or embodiments described above and herein, the ring material may include a steel alloy and the test shaft material may include aluminum.

In any of the aspects or embodiments described above and herein, the bearing inner ring may include a first ring body and a second ring body, the first ring body and the second ring body may extend circumferentially about the axial centerline, and the ring test assembly may include the first ring body and the second ring body mounted on the test shaft.

In any of the aspects or embodiments described above and herein, testing the material strength of the ring body (bearing inner ring) by performing the plurality of cycles of the steps of heating the ring test assembly and cooling the ring test assembly may include performing the plurality of cycles until the ring body (bearing inner ring) fractures.

According to another aspect of the present invention, a method for testing a material strength of a ring body (e.g., a ring body for an engine such as a gas turbine engine, rotary engine or piston engine) includes mounting the ring body on a test shaft having an axial centerline to form a ring test assembly of the ring body mounted on the test shaft, the ring body mounted on the test shaft with an interference fit, heating the ring test assembly to increase a temperature of the ring test assembly to a first temperature range, the ring body having a maximum test hoop stress at the first temperature range, cooling the ring test assembly to decrease the temperature of the ring test assembly from the first temperature range to a second temperature range, the ring body having a minimum test hoop stress at the second temperature range, testing the material strength of the ring body by performing a plurality of cycles of the steps of heating the ring test assembly and cooling the ring test assembly, and visually inspecting the ring body (e.g., bearing inner ring) subsequent to performing the plurality of cycles to classify a material strength of the ring body (e.g., inner ring).

In any of the aspects or embodiments described above and herein, the ring test assembly may be rotationally fixed relative to the center axis while heating the ring test assembly and cooling the ring test assembly.

In any of the aspects or embodiments described above and herein, the ring body may include a ring material having a first coefficient of thermal expansion, the test shaft may include a test shaft material having a second coefficient of thermal expansion, and the second coefficient of thermal expansion may be greater than the first coefficient of thermal expansion.

In any of the aspects or embodiments described above and herein, the method may further include selecting a first diameter and a first stiffness of the test shaft to be substantially the same as a second diameter and a second thickness, respectively, of a reference shaft of a reference engine configurable with the ring body mounted on the reference shaft.

In any of the aspects or embodiments described above and herein, the reference shaft may include a reference shaft material different than the test shaft material.

In any of the aspects or embodiments described above and herein, the test shaft may be a solid shaft and the reference shaft may be a hollow shaft.

The foregoing features and elements may be combined in various combinations without exclusivity, unless expressly indicated otherwise. For example, aspects and/or embodiments of the present disclosure may include any one or more of the individual features or elements disclosed above and/or below alone or in any combination thereof. These features and elements as well as the operation thereof will become more apparent in light of the following description and the accompanying drawings. It should be understood, however, the following description and drawings are intended to be exemplary in nature and non-limiting.

### DESCRIPTION OF THE DRAWINGS

FIG. 1 illustrates a perspective view of an aircraft including a propulsion system, in accordance with one or more embodiments of the present disclosure.
FIG. 2 schematically illustrates a side, cutaway view of a powerplant assembly including an engine, in accordance with one or more embodiments of the present disclosure.
FIG. 3 schematically illustrates a side, cutaway view of a bearing for an engine, in accordance with one or more embodiments of the present disclosure.
FIG. 4 illustrates an exploded, perspective view of a shaft and an inner ring for a bearing, in accordance with one or more embodiments of the present disclosure.
FIG. 5 illustrates a block diagram depicting a method for testing a material strength of a bearing inner ring, in accordance with one or more embodiments of the present disclosure.
FIG. 6 schematically illustrates a side, cutaway view of a ring test assembly including a test shaft and a bearing inner ring mounted on the test shaft, in accordance with one or more embodiments of the present disclosure.
FIG. 7 schematically illustrates a heating system, in accordance with one or more embodiments of the present disclosure.

### DETAILED DESCRIPTION

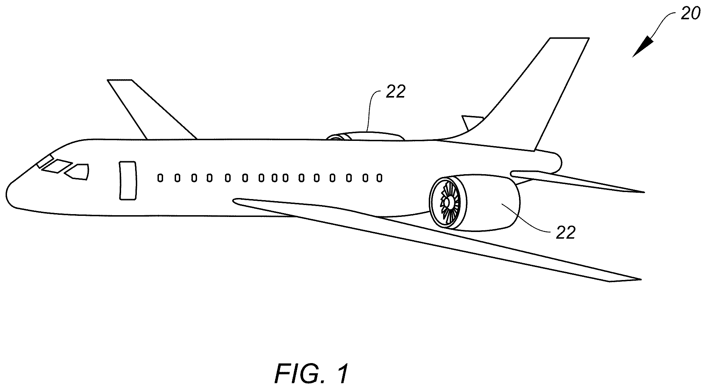

FIG. 1 illustrates an aircraft 20 including at least one propulsion system 22. Briefly, the aircraft may be a fixed-wing aircraft (e.g., an airplane), a rotary-wing aircraft (e.g., a helicopter), a tilt-rotor aircraft, a tilt-wing aircraft, or another aerial vehicle. Moreover, the aircraft may be a manned aerial vehicle or an unmanned aerial vehicle (UAV, e.g., a drone).

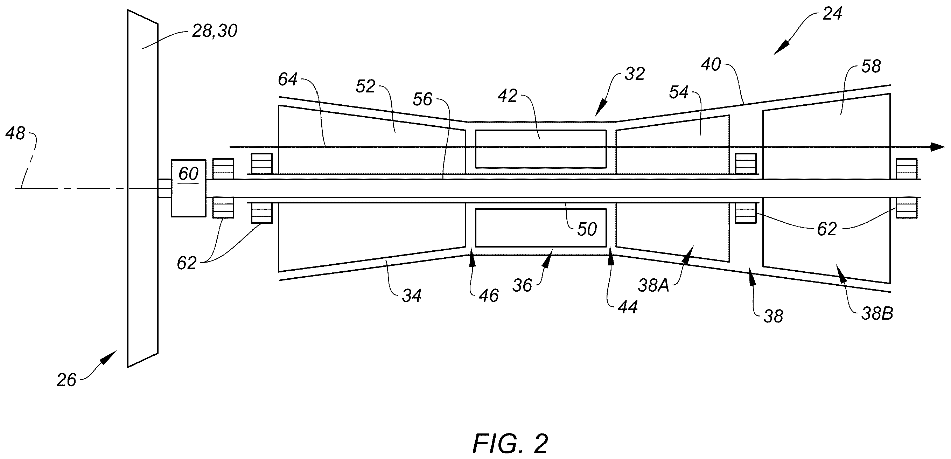

FIG. 2 schematically illustrates a powerplant assembly 24. As shown in FIG. 2, the powerplant assembly 24 may form a portion of the propulsion system 22. Alternatively, the powerplant assembly 24 may form a portion of an electric power system (or more generally an electric machine) such as, but not limited to, an auxiliary power unit (APU) for the aircraft 20. While the powerplant assembly 24 is described herein with respect to aircraft applications, aspects of the present disclosure powerplant assembly 24 may also be equally applicable to ground-based powerplant applications (e.g., ground-based power generation, ground-based vehicles, etc.). The propulsion system 22 of FIG. 2 includes the powerplant assembly 24 and a mechanical load 26. The mechanical load 26 may be configured as or otherwise include a rotor 28 mechanically driven by the powerplant assembly 24. This driven rotor 28 may be a bladed propulsor rotor 30 (e.g., an air mover) where the powerplant assembly 24 is (or is part of) the propulsion system 22, as shown in FIG. 2. The propulsor rotor 30 (e.g., a propeller, a rotorcraft rotor, etc.) includes a plurality of rotor blades arranged circumferentially around and connected to at least (or only) one rotor disk or hub. Alternatively, the driven rotor 28 may be a generator rotor in an electric power generator (or more generally an electric machine).

The powerplant assembly 24 includes an engine 32. The engine 32 of FIG. 2 is configured as a gas turbine engine. Examples of gas turbine engine configurations for the propulsion system 22 may include, but are not limited to, a turbofan engine, a turbojet engine, a propfan engine, or the like. Aspects of the present disclosure may be equally applicable to other powerplant assembly 24 engine configurations such as, but not limited to, rotary engines, piston engines, and the like. The engine 32 of FIG. 2 includes a compressor section 34, a combustor section 36, a turbine section 38, and an engine static structure 40. The combustor section 36 includes a combustor 42 (e.g., an annular combustor). The turbine section 38 includes a high-pressure turbine 38A and a power turbine 38B.

Components of the compressor section 34 and the turbine section 38 form a first rotational assembly 44 (e.g., a high-pressure spool) and a second rotational assembly 46 of the engine 32. The first rotational assembly 44 and the second rotational assembly 46 are mounted for rotation about a rotational axis 48 (e.g., an axial centerline) of the engine 32 relative to the engine static structure 40.

The first rotational assembly 44 includes a first shaft 50, a bladed compressor rotor 52 for the compressor section 34, and a bladed first turbine rotor 54 for the high-pressure turbine 38A. The first shaft 50 interconnects the bladed compressor rotor 52 and the bladed first turbine rotor 54.

The second rotational assembly 46 includes a second shaft 56 and a bladed second turbine rotor 58 for the power turbine 38B. The second shaft 56 is connected to the bladed second turbine rotor 58. The second shaft 56 operably connects (e.g., directly or indirectly connects) the bladed second turbine rotor 58 with the rotor 28 (e.g., the bladed propulsor rotor 30). For example, the second shaft 56 of FIG. 2 is coupled with the rotor 28 by a gear box 60 (e.g., a reduction gear box (RGB)). The gear box 60 includes a gear assembly (e.g., an epicyclic gear assembly) coupling the second shaft 56 and the rotor 28.

The engine static structure 40 includes engine casings, cowlings, and other fixed (e.g., non-rotating) structures of the engine 32 which house and/or support components of the engine 32 such as, but not limited to, those of the compressor section 33, the combustor section 36, and the turbine section 38. The engine static structure 40 includes one or more bearing assemblies 62 and/or gear trains configured to rotationally support and/or interconnect components of the first rotational assembly 44 and the second rotational assembly 46.

During operation of the propulsion system 22 of FIG. 2, ambient air enters the powerplant assembly 24 through an air intake into and through a core flow path 642 of the engine 32. The ambient air flow along the core flow path 64 is compressed in the compressor section 34, by rotation of the bladed compressor rotor 52, and directed into the combustor 42. Fuel is injected into the combustor 42 and mixed with the compressed air to provide a fuel-air mixture. This fuel-air mixture is burned in the combustor 42, and the resultant combustion gas is directed through the high-pressure turbine 38A and the power turbine 38B and subsequently exhausted from the powerplant assembly 24. The bladed first turbine rotor 54 and the bladed second turbine rotor 58 rotationally drive the first rotational assembly 44 and the second rotational assembly 46, respectively, in response to the combustion gas flow through the high-pressure turbine 38A and the power turbine 38B. The second rotational assembly 46 (e.g., the second shaft 56) drives rotation of the rotor 28 (e.g., the bladed propulsor rotor 30), for example, through the gear box 60.

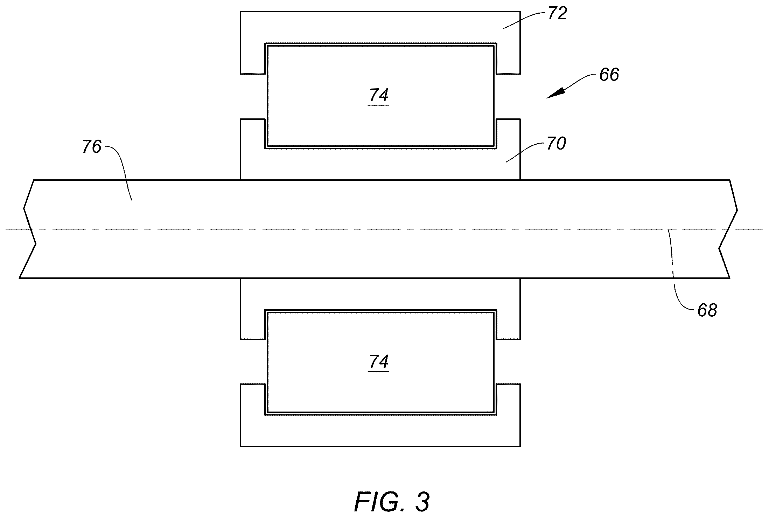

FIG. 3 illustrates a side, cutaway view of an exemplary configuration of a bearing 66. The bearing 66 may form a portion of one or more of the bearing assemblies 62; however, the bearing 66 is not limited to use with the bearing assemblies 62 or an engine (e.g., the engine 32). The bearing 66 of FIG. 3 extends circumferentially about an axial centerline 68 (e.g., the rotational axis 48). The bearing includes an inner ring 70 (also known as an "inner race"), an outer ring 72 (also known as an "outer race"), and a plurality of bearing elements 74. The inner ring 70 and the outer ring 72 extend circumferentially about (e.g., completely around) the axial centerline 68. The outer ring 72 is disposed radially outward of the inner ring 70. The bearing elements 74 are disposed radially between and constrained by the inner ring 70 and the outer ring 72. As shown in FIG. 3, the inner ring 70 may be mounted on (e.g., fixedly mounted to) a rotatable shaft 76. For example, the inner ring 70 may be mounted on one of the first shaft 50 or the second shaft 56 and the outer ring 72 may be mounted on (e.g., fixedly mounted to) a case or other engine static structure 40 of the engine 32. The bearing elements 74 of FIG. 3 are configured as cylindrical roller elements, however, the present disclosure is not limited to this foregoing exemplary configuration of the bearing elements 74. For example, the bearing elements 74 may alternatively be ball elements, spherical roller elements, tapered roller elements, needle roller elements, etc.

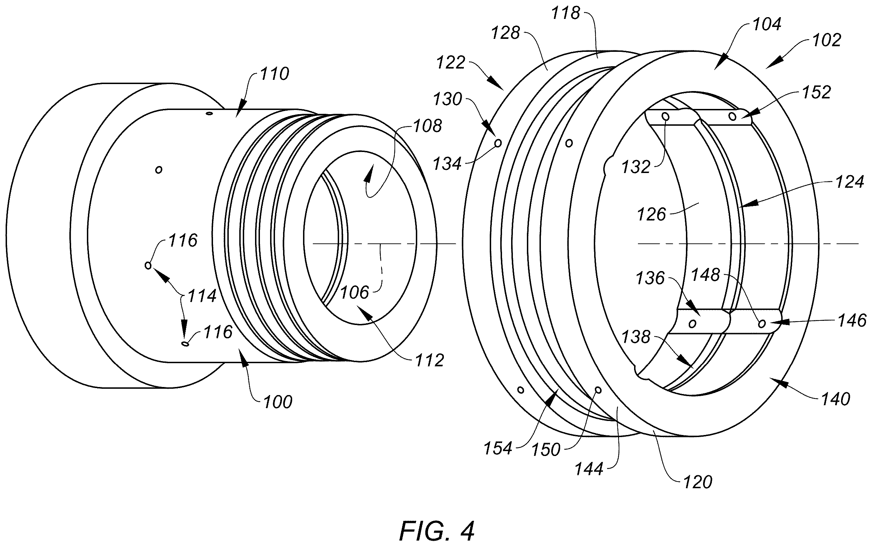

FIG. 4 illustrates a perspective view of a portion of a rotatable shaft 100 (e.g., the first shaft 50 or the second shaft 56) for rotational equipment and a bearing 102 (e.g., the bearing 66) including an inner ring 104. For example, the bearing 102 and its inner ring 104 may form a portion of one of the bearing assemblies 62 of the engine static structure 40 (see FIGS. 2 and 3). The inner ring 104 is configured to be installed and/or mounted on the shaft 100. The shaft 100 and the inner ring 104 extend circumferentially about (e.g., completely around) an axial centerline 106, which axial centerline 106 is a rotational axis of the shaft 100.

The shaft 100 may extend between and to an inner side 108 (e.g., an inner radial side) of the shaft 100 and an outer side 110 (e.g., an outer radial side) of the shaft 100. The inner side 108 may surround and form an inner cavity 112 of the shaft 100 extending along the axial centerline 106. The shaft 100 may form a plurality of lubrication passages 114 extending through the shaft 100 from the inner side 108 to the outer side 110. The lubrication passages 114 may be distributed circumferentially about the shaft 100. Each of the lubrication passages 114 may include a passage inlet (not shown) at (e.g., on, adjacent, or proximate) the inner side 108 and a passage outlet 116 at (e.g., on, adjacent, or proximate) the outer side 110. In operation, a lubricant (e.g., oil) may be directed into the inner cavity 112 and may flow through the lubrication passages 114 (e.g., from the passage inlet to the passage outlet 116 of each of the lubrication passages 114) to the outer side 110.

The inner ring 104 of FIG. 4 includes a first ring body 118 and a second ring body 120. The first ring body 118 and the second ring body 120 are described herein as discrete structural bodies of the inner ring 104, however, the inner ring 104 may alternative be formed by a unitary structure of the first ring body 118 and the second ring body 120. The first ring body 118 extends (e.g., axially extends) between and to a first end 122 of the first ring body 118 and a second end 124 of the first ring body 118. The first ring body 118 extends (e.g., radially extends) between and to an inner radial surface 126 of the first ring body 118 and an outer radial surface 128 of the first ring body 118. The first ring body 118 has a diameter (D_{RING1}) at the inner radial surface 126. The first ring body 118 forms a plurality of lubrication passages 130 extending through the first ring body 118 from the inner radial surface 126 to the outer radial surface 128. The lubrication passages 130 may be distributed circumferentially about the first ring body 118. Each of the lubrication passages 130 may include a passage inlet 132 disposed at (e.g., on, adjacent, or proximate) the inner radial surface 126 and a passage outlet 134 disposed at (e.g., on, adjacent, or proximate) the outer radial surface 128. The first ring body 118 may further form a plurality of lubrication grooves 136 at (e.g., on, adjacent, or proximate) the inner radial surface 126. Each of the lubrication grooves 136 may form a recessed portion of the first ring body 118 from the inner radial surface 126. Each of the lubrication grooves 136 may extend (e.g., axially extend) between and to the first end 122 and the second end 124. The passage inlet 132 of each of the lubrication passages 130 may be disposed within a respective one of the lubrication grooves 136.

Similarly, the second ring body 120 extends (e.g., axially extends) between and to a first end 138 of the second ring body 120 and a second end 140 of the second ring body 120. The second ring body 120 extends (e.g., radially extends) between and to an inner radial surface 142 of the second ring body 120 and an outer radial surface 144 of the second ring body 120. The second ring body 120 has a diameter (D_{RING2}) at the inner radial surface 142. The second ring body 120 forms a plurality of lubrication passages 146 extending through the second ring body 120 from the inner radial surface 142 to the outer radial surface 144. The lubrication passages 146 may be circumferentially distributed about the second ring body 120. Each of the lubrication passages 146 may include a passage inlet 148 disposed at (e.g., on, adjacent, or proximate) the inner radial surface 142 and a passage outlet 150 disposed at (e.g., on, adjacent, or proximate) the outer radial surface 144. The second ring body 120 may further form a plurality of lubrication grooves 152 at (e.g., on, adjacent, or proximate) the inner radial surface 142. Each of the lubrication grooves 152 may form a recessed portion of the second ring body 120 from the inner radial surface 142. Each of the lubrication grooves 152 may extend (e.g., axially extend) between and to the first end 138 and the second end 140. The passage inlet 148 of each of the lubrication passages 146 may be disposed within a respective one of the lubrication grooves 152.

The first ring body 118 and the second ring body 120 include a ring material forming all or a substantial portion of the first ring body 118 and the second ring body 120, respectively. The ring material may typically be a steel alloy having high wear resistance as well as material strength (e.g., fatigue strength) at high operating temperatures such as, but not limited to, American Iron and Steel Institute (AISI) M50 alloy steel or similar bearing steel alloys. The ring material has a ring temperature expansion coefficient (α_{RING}).

The inner ring 104 is installed on and/or mounted to the shaft 100 with the first ring body 118 and the second ring body 120 circumscribing the shaft 100 (e.g., the outer side 110). The first ring body 118 is disposed axially adjacent the second ring body 120, for example, with the second end 124 disposed at (e.g., on, adjacent, or proximate) the first end 138. The inner ring 104 (e.g., the first ring body 118 and the second ring body 120) is disposed on the shaft 100 at (e.g., on, adjacent, or proximate) the lubrication passages 114 (e.g., the passage outlet 116 of each of the lubrication passages 114). The first ring body 118 and the second ring body 120 cooperatively form a roller element groove 154 at (e.g., on, adjacent, or proximate) the outer radial surface 128 and the outer radial surface 144, respectively. The roller element groove 154 extends circumferentially about (e.g., completely around) the axial centerline 106 along the second end 124 and the first end 138. The roller element groove 154 is configured to retain a plurality of roller elements, such as the bearing elements 74 of FIG. 3.

During operation of the bearing 102, for example, with the engine 32 of FIG. 2, the inner ring 104 (e.g., the first ring body 118 and the second ring body 120) must be able to withstand rapid shaft rotation speeds and high operating temperatures for an extended period of time without failure (e.g., cracking and/or fracture). Various characteristics of the inner ring 104 may impact the material strength of the inner ring 104 (e.g., the first ring body 118 and the second ring body 120) and, hence, the durability of the inner ring 104 for operational use. For example, material selection, geometric features, and/or lubrication passage 130, 146 characteristics (e.g., quantity, diameter, etc.) of the inner ring 104 may contribute to differences in the material strength of the inner ring 104. Machining techniques and other treatments (e.g., hardening treatments, heat treatments, etc.) for forming the inner ring 104 (e.g., the first ring body 118 and the second ring body 120) may additionally impact inner ring 104 material strength and operational performance. For example, some machining (e.g., drilling) techniques for forming the lubrication passages 130, 146 may reduce the material strength of the inner ring 104, particularly as these lubrication passages 130, 146 may be susceptible to greater stress concentrations than at the inner radial surfaces 126, 142 (e.g., the inner ring 104 bore). Conventionally, the material strength and performance of bearing rings, such as the inner ring 104, may be tested by operation with an associated engine (e.g., the engine 32). For example, the engine may be operated with the bearing ring 104 rotationally supporting the shaft 100 at a high rotation speed for an extended duration (e.g., greater than 150 hours). Following this operation, the bearing ring 104 may be inspected for cracking or other signs of premature failure or fatigue. However, this process for testing the bearing ring is operationally complex, expensive, and time consuming.

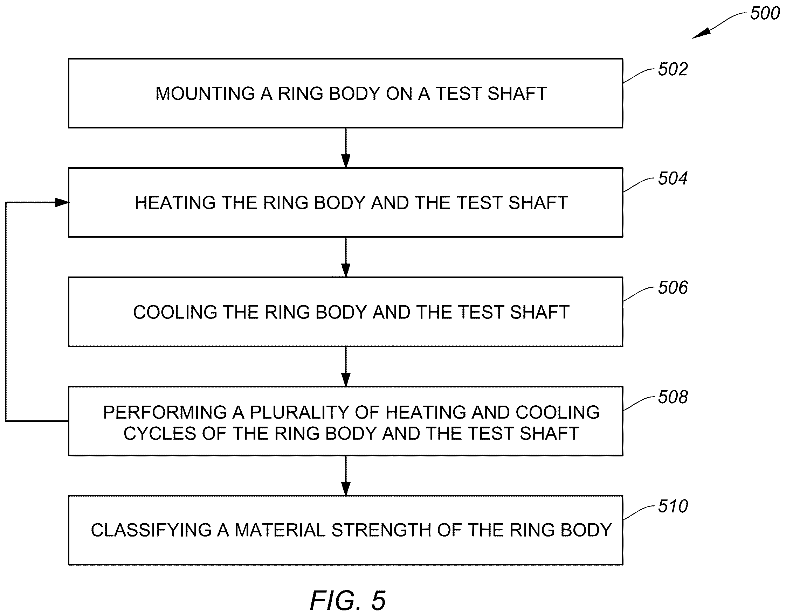

Referring to FIG. 5, a method 500 for method for testing a material strength of a ring body (e.g., the bearing inner ring 104) is provided. FIG. 5 illustrates a flowchart for the method 500. The method 500 will be described herein with respect to the inner ring 104 configured for use with the engine 32. However, it should be understood that the method 500 is not limited to use with the particular inner ring 104 described herein. For example, aspects of the method 500 may be equally applicable to testing the material strength of other annular (e.g., full-hoop) components. As will be clear from the description below, the steps of the method 500 are performed with the inner ring 104 outside of (e.g., not installed on) the engine 32 or other rotational equipment. In contrast to the conventional material strength testing processes discussed above, the present disclosure method 500 may be performed with the inner ring 104 in a non-rotating (e.g., rotationally fixed) state and independent of any rotational equipment (e.g., the engine 32). Unless otherwise noted herein, it should be understood that the steps of method 500 are not required to be performed in the specific sequence in which they are discussed below and, in some embodiments, the steps of the method 500 may be performed separately or simultaneously.

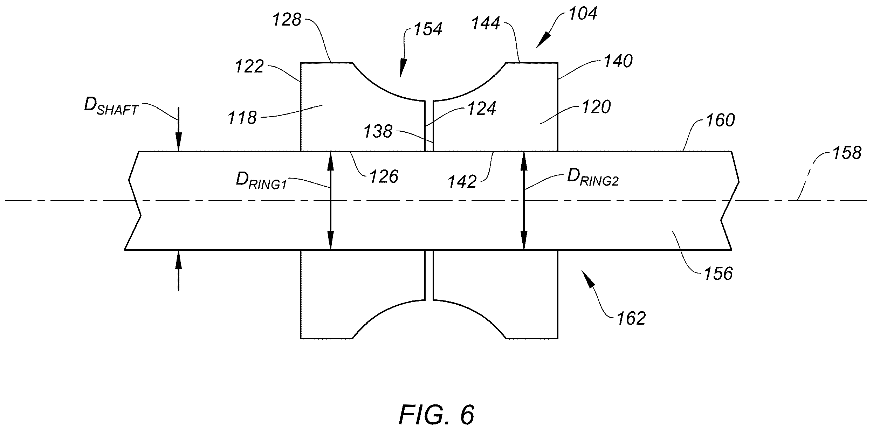

With additional reference to FIG. 6, step 502 includes mounting the inner ring 104 (e.g., the first ring body 118 and/or the second ring body 120) on a test shaft 156. The test shaft 156 has an axial centerline 158. The test shaft 156 extends on and along the axial centerline 158. The test shaft 156 forms an outer radial surface 160 (e.g., an outer diameter surface) extending circumferentially about (e.g., completely around) the axial centerline 158. The test shaft 156 (e.g., the outer radial surface 160) has a shaft diameter (D_{SHAFT}). The test shaft 156 may be a solid or hollow (e.g., tubular) shaft. The test shaft 156 includes a shaft material forming all or a substantial portion of the test shaft 156. The shaft material has a shaft temperature expansion coefficient (α_{SHAFT}). The shaft temperature expansion coefficient (α_{SHAFT}) is greater than the ring temperature expansion coefficient (α_{RING}). For example, the shaft material may typically be aluminum or another material (e.g., metal or metal alloy) having a shaft temperature expansion coefficient (α_{SHAFT}) which is greater than the ring temperature expansion coefficient (α_{RING}) of the ring material (e.g., steel alloy).

Characteristics of the test shaft 156 such as, but not limited to, the shaft diameter (D_{SHAFT}), the shaft material of the test shaft 156), and a stiffness of the test shaft 156, may be selected based on characteristics of a reference shaft. The reference shaft may be understood as a shaft on which the inner ring 104 (or another annular component) is intended to be installed for its operation as part of the bearing 102. For example, the reference shaft may be the shaft 100 (e.g., one of the first shaft 50 or the second shaft 56) on which the inner ring 104 may be installed with the bearing 102 to facilitate operation of the engine 32. The shaft diameter (D_{SHAFT}) is selected to the be same as or substantially the same as a diameter of the reference shaft at a mounting position of the inner ring 104 on the reference shaft. The shaft material and structural characteristics of the test shaft 156 may be selected such that a stiffness of the test shaft 156 is the same as or substantially the same as a stiffness of the reference shaft at the mounting position of the inner ring 104 on the reference shaft. The structural characteristics of the test shaft 156 may be different than those of the reference shaft to accommodate material differences between the test shaft 156 and the reference shaft. For example, the reference shaft may be a hollow (e.g., tubular) steel alloy shaft. In contrast, the test shaft 156 having a shaft material (e.g., aluminum) selected to facilitate a greater shaft temperature expansion coefficient (α_{SHAFT}) than the ring temperature expansion coefficient (α_{RING}), may be solid or have a greater shaft thickness (e.g., in comparison to the reference shaft) to facilitate an equivalent stiffness of the test shaft 156 with the reference shaft.

Mounting the inner ring 104 on the test shaft 156 includes mounting one or both of the first ring body 118 or the second ring body 120 on the outer radial surface 160 such that the first ring body 118 and/or the second ring body 120 has an initial hoop stress (e.g., expressed in pounds per square inch (PSI) or kilopascals per square inch (KSI)) imparted on the first ring body 118 and/or the second ring body 120 by the test shaft 156. This mounted configuration of the inner ring 104 (e.g., the first ring body 118 and/or the second ring body 120) on the test shaft 156 is referred to herein as a ring test assembly 162, which ring test assembly 162 includes one or both of the first ring body 118 or the second ring body 120 and the test shaft 156. For example, the inner ring 104 may be mounted on the outer radial surface 160 with an interference fit between the inner radial surface 126, 142 and the outer radial surface 160. In some embodiments, the ring test assembly 162 may optionally include one or more axial retention members (e.g., threaded nuts) installed on the test shaft 156 to axially fix the inner ring 104 and to reflect stresses on the inner ring 104 from axial preloading (e.g., corresponding to an axial preloading of the inner ring 104 in a reference engine). The present disclosure, however, does not require the inclusion of an axial preload on the inner ring 104 for the steps of the method 500. The characteristics of the test shaft 156 are selected, as discussed above, such that the initial hoop stress of the inner ring 104 mounted on the test shaft 156 may be expected to the same as or substantially the same as a hoop stress of the inner ring 104 mounted on the reference shaft under the same ambient and operational conditions (e.g., a non-rotating state of the inner ring 104 under same or substantially the same ambient temperature conditions such as room temperature conditions).

Step 504 includes heating the ring test assembly 162 to increase a temperature of the ring test assembly 162 to a first temperature range (e.g., a predetermined temperature range). As the temperature of the ring test assembly 162 increases, the greater shaft temperature expansion coefficient (α_{SHAFT}) of the test shaft 156 relative to the ring temperature expansion coefficient (α_{RING}) of the inner ring 104 causes the hoop stress of the inner ring 104 to increase as a result of expansion of the test shaft 156. Accordingly, the inner ring 104 may be a maximum test hoop stress at the first temperature range. The first temperature range may be selected such that the maximum test hoop stress of the inner ring 104, with the ring test assembly 162 at the first temperature range, may be approximately the same as a hoop stress of the inner ring 104 installed on the reference shaft (e.g., the shaft 100) of a reference engine (e.g., the engine 32) for a maximum operating state of the inner ring 104. This maximum operating state may correspond to a maximum expected hoop stress of the inner ring 104 at normal operating conditions, for example, during operation of the reference engine. As a non-limiting example, the first temperature range selected for the inner ring 104 may be greater than or encompass 150 degrees Fahrenheit (150 °F or 65.6 °C), the first temperature range may be greater than or encompass 200 degrees Fahrenheit (200 °F or 93.3 °C). The present disclosure, however, is not limited to any particular temperature range or values of the first temperature range. Routine experimentation and/or analysis may be performed by one of ordinary skill in the art to select an appropriate upper temperature range of the ring test assembly 162 for obtaining the maximum test hoop stress of a ring body for a reference shaft and associated reference engine, in accordance with and as informed by one or more aspects of the present disclosure.

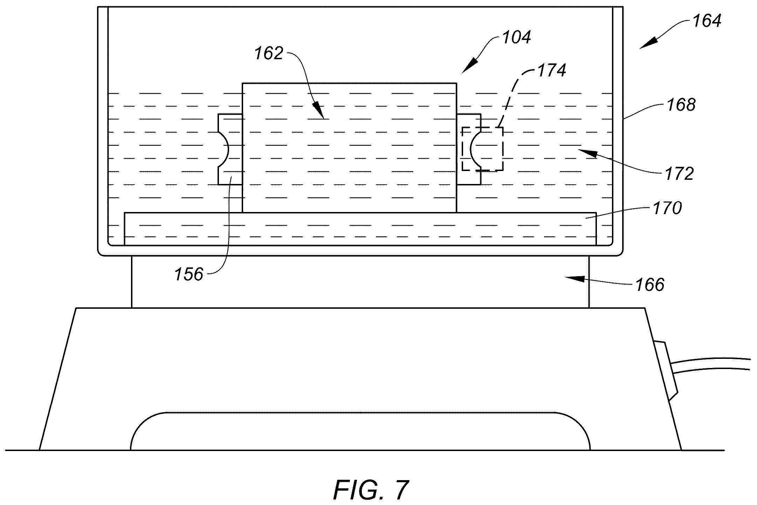

Referring to FIG. 7, step 504 may include heating the ring test assembly 162 to the first temperature range using a heating system 164 configured to expose the ring test assembly 162 to a temperature at or greater than the first temperature range. The heating system 164 of FIG. 7 includes an oil bath assembly 166. The oil bath assembly includes a tank 168 and a heater 170. The tank 168 is configured to retain a heating oil 172 which may be heated by the heater 170 to obtain a target temperature of the heating oil 172. While oil is described as a heating fluid for use by the heating system 164 to heat the ring test assembly 162, other heating fluids may alternatively be used. Other heating system 164 configurations, such as, but not limited to, ovens, autoclaves, and the like, may alternatively be used, and the present disclosure is not limited to any particular configuration of the heating system 164.

Step 504 may optionally include measuring a temperature of the ring test assembly 162 while heating the ring test assembly 162 (e.g., with the heating system 164). For example, step 504 may include measuring a temperature of the test shaft 156 with a temperature sensor 174 while heating the ring test assembly 162. The temperature sensor 174 may include a thermocouple, a resistance temperature detector (RTD), or other temperature sensing device disposed at (e.g., on, adjacent, or proximate) the test shaft 156. Measuring the temperature of the ring test assembly 162 may facilitate more rapid performance of the step 504 by identifying when the ring test assembly 162 (e.g., the test shaft 156) has reached the first temperature range.

Step 506 includes cooling the ring test assembly 162 to decrease a temperature of the ring test assembly 162 to a second temperature range (e.g., a predetermined temperature range) from the first temperature range. The ring test assembly 162 may be cooled to the second temperature range by immersing or exposing the ring test assembly 162 to a cooling fluid (e.g., water), by air circulation, or by exposure to ambient temperature conditions at or below the second temperature range. As the temperature of the ring test assembly 162 decreases, the greater shaft temperature expansion coefficient (α_{SHAFT}) of the test shaft 156 relative to the ring temperature expansion coefficient (α_{RING}) of the inner ring 104 causes the hoop stress of the inner ring 104 to decrease as a result of contraction of the test shaft 156. Accordingly, the inner ring 104 may be a minimum test hoop stress at the second temperature range. The second temperature range may be selected such that the minimum test hoop stress of the inner ring 104, with the ring test assembly 162 at the second temperature range, may be approximately the same as a hoop stress of the inner ring 104 installed on the reference shaft (e.g., the shaft 100) for a minimum operating state of the inner ring 104. This minimum operating state may correspond to a minimum expected hoop stress of the inner ring 104 at normal operating conditions, for example, during non-operation of the engine 32 (e.g., the engine 32 in a shut down condition). As a non-limiting example, the second temperature range selected for the inner ring 104 may be approximately and may encompass a typical room temperature such as, for example, approximately 60 °F to approximately 80 °F (approximately 15.6 °C to approximately 26.7 °C). The present disclosure, however, is not limited to any particular temperature range or values of the second temperature range. Routine experimentation and/or analysis may be performed by one of ordinary skill in the art to select an appropriate lower temperature range of the ring test assembly 162 for obtaining the minimum test hoop stress of the inner ring 104, in accordance with and as informed by one or more aspects of the present disclosure.

Step 508 includes testing the material strength of the inner ring 104 by performing a plurality of cycles of the steps 504 and 506 for increasing the temperature of the ring test assembly 162 to the first temperature range and decreasing the temperature of the ring test assembly 162 to the second temperature range. Step 508 may include repeating cycles of the steps 504 and 506 until the inner ring 104 fails, for example, by fracturing or exhibiting substantial cracking or other material defects (e.g., a fracture test). Alternatively, step 508 may include repeating cycles of the steps 504 and 506 for a predetermined quantity of the cycles (e.g., greater than 100 cycles, greater than 200 cycles, etc.).

Step 510 includes classifying a material strength and/or other material characteristics of the inner ring 104 subsequent to performing the step 508 cycles of steps 504 and 506. The material strength of the inner ring 104 may be evaluated by fracture test criteria whereby a quantity of the heating and cooling cycles (see step 508) applied to the inner ring 104 at the inner ring 104 fracture may be compared to a cycle threshold (a predetermined cycle threshold). The inner ring 104 may be classified as having acceptable material strength where the quantity of heating and cooling cycles is greater than the cycle threshold or having an unacceptable material strength where the quantity of heating and cooling cycles is less than the cycle threshold. Additionally or alternatively, the quantity of the heating and cooling cycles (see step 508) applied to the inner ring 104 at the inner ring 104 fracture may be compared to a similar fracture point for a reference inner ring. The reference inner ring may be another inner ring for the bearing 102 and for the same rotational equipment (e.g., the engine 32) which has previously been identified to have acceptable material strength, and which has a material, a geometric structure, and/or an associated manufacturing process which is different than that of the inner ring 104. The material strength of the inner ring 104 may additionally or alternatively be evaluated by material inspection of the inner ring 104 subsequent to performance of a predetermined quantity of the heating and cooling cycles (see step 508). The material inspection of the inner ring 104 may include a visual inspection for cracks or other material defects which may develop by application of the predetermined quantity of the heating and cooling cycles. In some embodiments, the material inspection of the inner ring 104 may include application of a fluorescent penetrant inspection (FPI) technique and/or other non-destructive inspection techniques.

While the principles of the disclosure have been described above in connection with specific apparatuses and methods, it is to be clearly understood that this description is made only by way of example and not as limitation on the scope of the disclosure. Specific details are given in the above description to provide a thorough understanding of the embodiments. However, it is understood that the embodiments may be practiced without these specific details.

It is noted that the embodiments may be described as a process which is depicted as a flowchart, a flow diagram, a block diagram, etc. Although any one of these structures may describe the operations as a sequential process, many of the operations can be performed in parallel or concurrently. In addition, the order of the operations may be rearranged. A process may correspond to a method, a function, a procedure, a subroutine, a subprogram, etc.

The singular forms "a," "an," and "the" refer to one or more than one, unless the context clearly dictates otherwise. For example, the term "comprising a specimen" includes single or plural specimens and is considered equivalent to the phrase "comprising at least one specimen." The term "or" refers to a single element of stated alternative elements or a combination of two or more elements unless the context clearly indicates otherwise. As used herein, "comprises" means "includes." Thus, "comprising A or B," means "including A or B, or A and B," without excluding additional elements.

It is noted that various connections are set forth between elements in the present description and drawings (the contents of which are included in this disclosure by way of reference). It is noted that these connections are general and, unless specified otherwise, may be direct or indirect and that this specification is not intended to be limiting in this respect. Any reference to attached, fixed, connected, or the like may include permanent, removable, temporary, partial, full and/or any other possible attachment option.

No element, component, or method step in the present disclosure is intended to be dedicated to the public regardless of whether the element, component, or method step is explicitly recited in the claims. As used herein, the terms "comprise", "comprising", or any other variation thereof, are intended to cover a non-exclusive inclusion, such that a process, method, article, or apparatus that comprises a list of elements does not include only those elements but may include other elements not expressly listed or inherent to such process, method, article, or apparatus.

While various inventive aspects, concepts and features of the disclosures may be described and illustrated herein as embodied in combination in the exemplary embodiments, these various aspects, concepts, and features may be used in many alternative embodiments, either individually or in various combinations and sub-combinations thereof. Unless expressly excluded herein all such combinations and sub-combinations are intended to be within the scope of the present application. Still further, while various alternative embodiments as to the various aspects, concepts, and features of the disclosures--such as alternative materials, structures, configurations, methods, devices, and components, and so on--may be described herein, such descriptions are not intended to be a complete or exhaustive list of available alternative embodiments, whether presently known or later developed. Those skilled in the art may readily adopt one or more of the inventive aspects, concepts, or features into additional embodiments and uses within the scope of the present application even if such embodiments are not expressly disclosed herein. For example, in the exemplary embodiments described above within the Detailed Description portion of the present specification, elements may be described as individual units and shown as independent of one another to facilitate the description. In alternative embodiments, such elements may be configured as combined elements.

## Claims

1. A method for testing a material strength of a bearing inner ring (104), the method comprising:
mounting the bearing inner ring (104) on a test shaft (156) having an axial centerline (158) to form a ring test assembly (162) of the bearing inner ring (104) mounted on the test shaft (156), the bearing inner ring (104) mounted on the test shaft (156) with an inner radial surface (126) of the bearing inner ring (104) contacting an outer radial surface (160) of the test shaft (156), the bearing inner ring (104) including a ring material having a first coefficient of thermal expansion, the test shaft (156) including a test shaft material having a second coefficient of thermal expansion, the second coefficient of thermal expansion greater than the first coefficient of thermal expansion;
heating the ring test assembly (162) to increase a temperature of the ring test assembly (162) to a first temperature range;
cooling the ring test assembly (162) to decrease the temperature of the ring test assembly (162) from the first temperature range to a second temperature range; and
testing the material strength of the bearing inner ring (104), the testing including performing a plurality of cycles of the steps of heating the ring test assembly (162) and cooling the ring test assembly (162).

2. The method of claim 1, further comprising visually inspecting the bearing inner ring (104) subsequent to performing the plurality of cycles to classify a material strength of the bearing inner ring (104).

3. The method of claim 2, wherein visually inspecting the bearing inner ring (104) includes applying a fluorescent penetrant inspection technique to the bearing inner ring (104).

4. The method of claim 1, 2 or 3, wherein the bearing inner ring (104) is mounted on the test shaft (156) with an interference fit.

5. The method of any preceding claim, wherein the inner bearing ring (104) has a maximum test hoop stress at the first temperature range and a minimum test hoop stress at the second temperature range.

6. The method of any preceding claim, wherein heating the ring test assembly (162) includes immersing the ring test assembly (162) in a heating oil (172).

7. The method of any preceding claim, wherein:
the bearing inner ring (104) forms a plurality of lubrication passages (130, 146) extending through the bearing inner ring (104) from the outer radial surface (128) toward the inner radial surface (126); and/or
the bearing inner ring (104) includes a first ring body (118) and a second ring body (120), the first ring body (118) and the second ring body (120) extend circumferentially about the axial centerline (158), and the ring test assembly (162) includes the first ring body (118) and the second ring body (120) mounted on the test shaft (156).

8. The method of any preceding claim, wherein the ring material includes a steel alloy and the test shaft material includes aluminum.

9. The method of any preceding claim, wherein testing the material strength of the bearing inner ring (104) by performing the plurality of cycles of the steps of heating the ring test assembly (162) and cooling the ring test assembly (162) includes performing the plurality of cycles until the bearing inner ring (104) fractures.

10. The method of any preceding claim, further comprising selecting a first diameter and a first stiffness of the test shaft (156) to be substantially the same as a second diameter and a second thickness, respectively, of a reference shaft (100) of a reference engine configurable with the bearing inner ring (104) mounted on the reference shaft (100).

11. A method for testing a material strength of a ring body (104), the method comprising:
mounting the ring body (104) on a test shaft (156) having an axial centerline (158) to form a ring test assembly (162) of the ring body (104) mounted on the test shaft (156), the ring body (104) mounted on the test shaft (156) with an interference fit;
heating the ring test assembly (162) to increase a temperature of the ring test assembly (162) to a first temperature range, the ring body (104) having a maximum test hoop stress at the first temperature range;
cooling the ring test assembly (162) to decrease the temperature of the ring test assembly (162) from the first temperature range to a second temperature range, the ring body (104) having a minimum test hoop stress at the second temperature range;
testing the material strength of the ring body (104) by performing a plurality of cycles of the steps of heating the ring test assembly (162) and cooling the ring test assembly (162); and
visually inspecting the ring body (104) subsequent to performing the plurality of cycles to classify a material strength of the ring body (104).

12. The method of claim 11, wherein the ring body (104) includes a ring material having a first coefficient of thermal expansion, the test shaft (156) includes a test shaft material having a second coefficient of thermal expansion, and the second coefficient of thermal expansion is greater than the first coefficient of thermal expansion.

13. The method of claim 11 or 12, further comprising selecting a first diameter and a first stiffness of the test shaft (156) to be substantially the same as a second diameter and a second thickness, respectively, of a reference shaft (100) of a reference engine configurable with the ring body (104) mounted on the reference shaft (100).

14. The method of claim 10 or 13, wherein:
the reference shaft (100) includes a reference shaft material different than the test shaft material; and/or
the test shaft (156) is a solid shaft and the reference shaft (100) is a hollow shaft.

15. The method of any preceding claim, wherein the ring test assembly (162) is rotationally fixed relative to the axial centerline (158) while heating the ring test assembly (162) and cooling the ring test assembly (162).
